# DEMANDE DE BREVET EUROPEEN

(11) **EP 0 825 478 A1**
(43) Date de publication de la demande: **25.02.1998**
(21) Numéro de dépôt: 97401957.2
(22) Date de dépôt: 21.08.1997
(51) Int. Cl.: G02F 1/157, C03C 17/36, C03C 17/34

(54) **Vitrage à propriétés optiques et/ou énergétiques variables**

(30) Priorité: 22.08.1996 FR 9610344
(71) Demandeur: SAINT-GOBAIN VITRAGE, 92400 Courbevoie (FR)
(72) Inventeur: Fix, Renaud, 75013 Paris (FR); Guiselin, Olivier, 75016 Paris (FR); Lin, Xue Yun, 92260 Fontenay Aux Roses (FR)
(74) Mandataire: Renous Chan, Véronique

(57) **Abrégé**

L'invention a pour objet un vitrage à système actif (4, 16) à propriétés optiques et/ou énergétiques variables, notamment du type système à transmission/absorption lumineuse variable (4), du type système à diffusion lumineuse variable (16) ou photochrome. Il comporte également au moins un moyen de protection thermique vis-à-vis du système actif et/ou d'ajustement de l'aspect optique conféré par ledit système audit vitrage, moyen sous la forme d'au moins un revêtement (6; 17) à propriétés de réflexion dans l'infrarouge et/ou dans l'ultraviolet et/ou dans le visible.

## Description

La présente invention concerne les vitrages à propriétés optiques/énergétiques variables. Elle se rapporte plus précisément à des vitrages dont certaines caractéristiques peuvent être modifiées par exemple sous l'effet d'une alimentation électrique, par exemple la diffusion lumineuse ou la transmission dans certaines longueurs d'onde du rayonnement électromagnétique, notamment dans l'infrarouge et/ou dans le visible, ou sous l'effet d'un rayonnement particulier.

Il existe en effet une demande de plus en plus accrue pour des vitrages dits « intelligents », c'est-à-dire des vitrages dont on peut moduler les propriétés à volonté, notamment afin de tenir compte de différents paramètres évolutifs. Ainsi, il peut s'avérer très avantageux que l'on puisse contrôler l'apport solaire à travers des vitrages montés en extérieur dans des bâtiments ou des véhicules du type automobile ou train, afin d'éviter un échauffement excessif des pièces ou habitacles en cas de fort ensoleillement. De même, il peut être utile de pouvoir contrôler le degré de vision à travers des vitrages, par exemple dans le cas de vitrages utilisés comme cloisons internes entre deux pièces, dans un bâtiment, ou entre deux compartiments, dans un moyen de locomotion du type train ou avion. Beaucoup d'autres applications existent aussi pour de tels vitrages : on peut mentionner par exemple les rétroviseurs de véhicules, qui, en s'obscurcissant en cas de besoin, peuvent éviter l'éblouissement du conducteur, ou les panneaux de signalisation routiers ou urbains, ne faisant apparaître messages ou dessins que par intermittence afin de mieux attirer l'attention.

L'intérêt que peuvent susciter de tels vitrages justifie que beaucoup de systèmes aient déjà été étudiés.

Ainsi, des systèmes connus permettant de moduler la transmission ou l'absorption lumineuse de vitrages sont notamment les systèmes dit viologènes, comme ceux décrits dans le brevet US-5 239 406 ou dans le brevet EP-A-0 612 826. Ceux-ci permettent d'obtenir une absorption variable essentiellement dans le domaine du visible.

Dans le même but, il existe également des systèmes dits électrochromes dont on rappelle brièvement le principe de fonctionnement : ceux-ci, de manière connue, comportent une couche d'un matériau électrochrome capable d'insérer réversiblement et simultanément des cations et des électrons et dont les états d'oxydation correspondant aux états insérés et désinsérés sont de coloration distincte, un des états présentant une transmission lumineuse plus élevée que l'autre. La réaction d'insertion ou de désinsertion est commandée par une alimentation électrique adéquate à l'aide d'un générateur de courant ou d'un générateur de tension. Le matériau électrochrome, usuellement à base d'oxyde de tungstène, doit ainsi être mis au contact d'une source d'électrons telle qu'une couche électroconductrice transparente et d'une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome, de sorte que, macroscopiquement, l'électrolyte apparaît comme un simple médium des cations.

La contre-électrode doit être constituée ou d'une couche neutre en coloration, ou du moins transparente ou peu colorée quand la couche électrochrome est à l'état décoloré. L'oxyde de tungstène étant un matériau électrochrome cathodique, c'est-à-dire que son état coloré correspond à l'état le plus réduit, un matériau électrochrome anodique tel que l'oxyde de nickel ou l'oxyde d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline...) ou le bleu de prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :
- soit l'électrolyte se présente sous la forme d'un polymère ou d'un gel, par exemple un polymère à conduction protonique tel que ceux décrits dans les brevets européens EP-0 253 713 et EP-0 670 346, ou un polymère à conduction d'ions lithium tels que ceux décrits dans les brevets EP-0 382 623, EP-0 518 754 ou EP-0 532 408,
- soit l'électrolyte est une couche minérale, conducteur ionique mais isolant électroniquement, on parle alors de systèmes électrochromes « tout solide ». Pour la description d'un système électrochrome « tout solide », on pourra se reporter à la demande de brevet française déposée le 27 mars 1996 sous le numéro de dépôt FR-96/03799.

Ces systèmes à matériau(x) d'insertion réversible sont particulièrement intéressants en ce sens qu'ils permettent de moduler l'absorption dans un domaine de longueurs d'onde plus large que les systèmes viologènes : ils peuvent absorber de manière variable non seulement dans le visible, mais aussi, notamment, dans l'infrarouge, ce qui peut leur conférer un rôle optique et/ou thermique efficace.

Les systèmes viologènes ou électrochromes, déposés ou associés à des substrats transparents constituent des vitrages dont l'absorption et la transmission lumineuse (ainsi que la transmission énergétique) peuvent varier dans des plages données, plages déterminées notamment par le choix des matériaux électrochromes utilisés et/ou par le choix de leur épaisseur.

Un autre type de vitrage « intelligent » est constitué par ce qu'on désigne sous le terme de valve optique : il s'agit d'un film comprenant une matrice de polymère généralement réticulé dans laquelle sont dispersées des micro-gouttelettes contenant des particules qui présentent la propriété de se placer selon une direction privilégiée sous l'action d'un champ électrique ou magnétique.

En fonction notamment du potentiel appliqué aux bornes des couches conductrices placées de part et d'autre du film, et de la concentration et de la nature des particules orientables, le film présente des propriétés optiques variables.

Ainsi, il est connu du brevet WO-93/09460 une valve optique à base d'un film comprenant une matrice en polyorganosilane réticulable et des particules orientables minérales ou organiques, plus particulièrement des particules absorbant la lumière telles que des particules de polyiodure. Quand le film est mis sous tension, les particules interceptent beaucoup moins la lumière que lorsqu'il est hors tension.

Un vitrage dont le principe de fonctionnement est similaire est également connu sous le terme de vitrage à cristaux liquides. Il est basé sur l'utilisation d'un film placé entre deux couches conductrices et à base d'une matière polymérique dans laquelle sont dispersées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision.

Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société SAINT-GOBAIN VITRAGE sous la dénomination commerciale « Priva-lite ».

On peut en fait utiliser tous les dispositifs à cristaux liquides connus sous les termes de « NCAP » (Nematic Curvilinearly Aligned Phases) ou « PDLC » (Polymer Dispersed Liquid Cristal).

On peut également utiliser, par exemple, les gels à base de cristaux liquides cholestériques contenant une faible quantité de polymère réticulé, comme ceux décrits dans le brevet WO-92/19695.

Il existe aussi des vitrages dits photochromes, dont la propriété d'absorption dans le visible et éventuellement dans au moins une partie de l'infrarouge, est modulable sous l'effet d'un rayonnement énergétique, situé généralement dans l'ultraviolet. Il en existe principalement deux familles : la première utilise comme éléments actifs des sels d'argent, notamment des halogénures d'argent par exemple dans une matrice verrière, halogénures qui par absorption dans l'ultraviolet se mettent réversiblement sous une forme d'aggrégats métalliques. La seconde famille utilise comme éléments actifs des colorants organiques généralement dispersés dans une matrice polymère, notamment des composés dérivés des spiroxazines et des spiropyranes. Par absorption dans l'ultraviolet, ces composés s'isomérisent réversiblement.

Tous ces vitrages présentent cependant des limites qui leur sont intrinsèques, limites qui concernent notamment d'une part leur tenue thermique et d'autre part leur aspect optique.

En effet, ces vitrages comportent une pluralité de composants électriquement et/ou électrochimiquement actifs dont la durabilité peut dépendre de la température à laquelle ils sont soumis. Dans le cas particulier des vitrages à transmission lumineuse variable tels que les vitrages électrochromes, lorsque ceux-ci sont à l'état coloré, ils sont fortement absorbants sur le plan énergétique. Or quand on les utilise en tant que vitrages extérieurs, et plus encore s'ils sont montés inclinés par rapport à la verticale (ce qui est le cas des vitrages pour automobile comme les toits auto ou les vitrages de toiture de bâtiment), ils peuvent, à l'état coloré, s'ils sont soumis suffisamment longtemps à un fort ensoleillement, s'échauffer jusqu'à des températures élevées atteignant 80°C. Or de telles températures peuvent provoquer un raccourcissement de la durée de vie des vitrages par dégradation progressive irréversible de l'un ou l'autre de leurs composants électrochimiques.

Le même type de problème peut également se poser pour les vitrages à diffusion lumineuse variable, comme les vitrages à cristaux liquides, d'abord parce que au-delà d'une certaine température appelée point d'éclaircissement, le composite polymère-cristaux liquides, mis en état diffusant, peut spontanément retourner à l'état transparent. Ensuite, si l'on a ajouté au composite un colorant dichroïque afin de pouvoir moduler conjointement la diffusion et la transmission lumineuse du vitrage, ce type de colorant présente une certaine instabilité vis-à-vis des ultraviolets, instabilité augmentant avec la température.

Les vitrages photochromes ont aussi un inconvénient lié à leur échauffement. En effet, les deux familles de vitrages photochromes mentionnées plus haut se teintent sous l'effet des ultraviolets, état « instable », le retour à l'état « stable », décoloré étant obtenu par un processus qui est activé thermiquement . Sous l'effet des ultraviolets, ces vitrages se colorent, deviennent absorbants, et donc s'échauffent. En cas de fort ensoleillement, l'échauffement devient excessif et tend à faire retourner les vitrages dans leur état stable, décoloré : le contraste « accessible » diminue.

Par ailleurs, l'aspect optique de ces vitrages peut ne pas être pleinement satisfaisant selon les applications visées. Ainsi, lorsqu'on équipe toute une facade de bâtiment de vitrages électrochromes, on peut estimer qu'ils offrent un aspect d'ensemble un peu sombre quand ils sont tous à l'état coloré. Il pourrait aussi s'avérer intéressant de pouvoir mieux ajuster l'aspect en réflexion d'un vitrage électrochrome équipant une voiture selon la couleur de la carrosserie extérieure. De même, les vitrages à cristaux liquides offrent, à l'état diffusant, un aspect blanc laiteux, (en l'absence de colorant) identique quel que soit le côté où se trouve l'observateur. Or il pourrait s'avérer avantageux de parvenir à supprimer cette symétrie d'aspect pour des raisons esthétiques.

L'invention a alors pour objet de pallier à ces inconvénients, en proposant notamment de nouveaux vitrages à propriétés optiques et/ou énergétiques variables, notamment électrocommandables ou photochromes, qui présentent une plus grande durabilité thermique et/ou dont on puisse davantage moduler l'aspect optique.

L'invention a pour objet un vitrage comportant au moins un système actif à propriétés optiques et/ou énergétiques variables, notamment électrocommandable du type système à transmission/absorption lumineuse variable ou du type système à diffusion lumineuse variable, ou du type photochrome. Ce vitrage comporte en outre au moins un moyen de protection thermique vis-à-vis du système électrocommandable et/ou d'ajustement de l'aspect optique conféré par le système électrocommandable au vitrage. Ce moyen se présente avantageusement sous la forme d'au moins un revêtement à propriétés de réflexion dans l'infrarouge et/ou dans le visible et/ou dans l'ultra-violet :

Suivant sa configuration dans le vitrage, ce revêtement réfléchissant peut en effet assumer deux fonctions alternativement ou cumulativement.

Quand le revêtement est disposé dans le vitrage de facon à ce que, une fois le vitrage monté, il se trouve entre une source de chaleur et le système actif (électrochimique), il joue le rôle d'écran thermique, en réfléchissant tout ou partie de l'énergie émise par la source de chaleur. Il évite ainsi un échauffement excessif du système actif du type électrochimique. L'application la plus intéressante concerne les vitrages montés en extérieur équipant les bâtiments ou les véhicules et destinés à être exposés à de longues périodes d'ensoleillement. Elle vise tout particulièrement les vitrages électrochromes qui, à l'état coloré et en l'absence de « filtre » thermique, peuvent s'échauffer fortement par absorption énergétique, échauffement néfaste pour la durée de vie du vitrage et même pour les problèmes de sécurité, la température de surface du vitrage pouvant, sans filtre thermique, atteindre 80°C.

Elle vise aussi les vitrages actifs du type photochrome, qui, comme évoqué plus haut, tendent à perdre leurs propriétés en cas d'échauffement excessif.

Deux conséquences très avantageuses en découlent :
□ d'une part, l'invention permet d'allonger la durée de vie des vitrages « intelligents » que l'on destinait déjà à des applications en extérieur. Cela est commercialement et techniquement très intéressant, aussi bien dans le domaine du bâtiment où les constructeurs doivent garantir des durées de vie des matériaux utilisés d'au moins 5 ou 10 ans, que dans le domaine de l'automobile où règnent des normes de sécurité sévères, en terme de qualité optique notamment,
□ d'autre part, l'invention permet d'envisager pour des applications en extérieur des vitrages « intelligents » jusque-là utilisés essentiellement en intérieur pour des raisons de trop faible durabilité thermique, et/ou d'instabilité vis-à-vis de certains rayonnements ce qui est par exemple le cas de certains vitrages à cristaux liquides utilisant des colorants dichroïques qui sont relativement instables vis-à-vis des rayonnements ultraviolets.

On peut également conférer au revêtement réfléchissant selon l'invention un rôle optique très avantageux, en le sélectionnant de manière à ce qu'il module l'aspect optique et donc l'esthétisme du vitrage. On peut penser, de manière non limitative, à deux types de « modulation optique » très avantageux.

Pour les vitrages à transmission/absorption lumineuse variable du type électrochrome, on a vu précédemment que le type de système électrochimique choisi permettait de fixer les bornes entre lesquelles la transmission ou l'absorption lumineuse du vitrage allait pouvoir varier. Il en est de même du choix de l'aspect en colorimétrie du vitrage. Ainsi le choix d'un système électrochrome utilisant comme matériau électrochrome cathodique de l'oxyde de tungstène conduira à un vitrage dont la couleur sera dans les bleus.

Combiner à un tel système un revêtement réfléchissant dont on peut ajuster précisément les propriétés optiques, notamment par le choix de sa composition et de son épaisseur, permet d'adapter l'aspect optique du vitrage de différentes façons : en sélectionnant de manière appropriée le revêtement réfléchissant, on peut abaisser de manière contrôlée la plage de transmission lumineuse du vitrage, sans diminuer notablement son contraste (le contraste étant défini comme le rapport de la transmission lumineuse à l'état complètement décoloré et à l'état complètement coloré). En outre, le revêtement réfléchissant peut avoir un impact colorimétrique sur le vitrage, en modifiant la couleur de celui-ci sur l'une ou l'autre de ses faces.

Ces remarques s'appliquent aussi aux vitrages actifs du type photochrome : le revêtement réfléchissant limite leur échauffement donc préserve leurs propriétés, et peut aussi moduler leurs propriétés optiques.

Par ailleurs, le revêtement réfléchissant peut également être très intéressant sur le plan esthétique lorsqu'on l'incorpore dans un vitrage à diffusion lumineuse variable du type à cristaux liquides. Avec ce type de vitrage, on a en général, un aspect absolument « symétrique » quel que soit le côté où se trouve l'observateur, aspect transparent à l'état non diffusant et aspect souvent dans les blancs laiteux à l'état diffusant, ce qui est le cas des vitrages actuellement commercialisés sous le nom de « Priva-lite » par SAINT-GOBAIN VITRAGE. Or, pour des applications particulières, on souhaite maintenant arriver à avoir un aspect optique différent selon le côté où se trouve l'observateur. Le revêtement réfléchissant suivant l'invention permet de parvenir à ce résultat, puisqu'un vitrage muni à la fois du système à diffusion lumineuse variable et du revêtement réfléchissant présente, notamment à l'état diffusant, une face qui va conserver l'aspect diffusant, blanc et laiteux, évoqué précédemment, mais aussi une face opposée qui, elle, va avoir un aspect réfléchissant modulable en couleur et en intensité grâce à ce revêtement. Ce type de vitrage rendu « dissymétrique » optiquement trouve avantageusement application par exemple en tant que vitrage pour l'automobile tel qu'un toit auto ; de l'extérieur, l'observateur voit un vitrage réfléchissant particulièrement esthétique, alors que du côté de l'intérieur de l'habitacle, l'effet diffusant recherché est maintenu.

On peut conférer un autre rôle au revêtement réfléchissant : en choisissant sa nature et son épaisseur de manière appropriée, celui-ci peut être utilisé comme couche électroconductrice du système électrocommandable.

De nombreux revêtements réfléchissants peuvent être avantageusement utilisés dans le cadre de l'invention. Ils peuvent être mono-couches ou être constitués d'un empilement d'au moins deux couches. En général, il s'agit d'une couche réfléchissante que l'on associe à au moins une couche de matériau diélectrique destinée à la protéger des agressions chimiques ou mécaniques et/ou à ajuster ses propriétés optiques. On utilise usuellement un revêtement sous la forme d'au moins une couche réfléchissante disposée entre deux couches (ou superpositions de couches) de matériau diélectrique du type oxyde ou nitrure de métal ou de silicium.

On peut choisir la couche réfléchissante à base d'au moins un des métaux appartenant au groupe suivant : argent Ag, or Au, cuivre Cu, aluminium Al, chrome Cr, nickel Ni, fer Fe, tantale Ta, zirconium Zr, zinc Zn, étain Sn, indium In, rhodium Rh, cadmium Cd ou encore silicium Si (ces métaux ou alliages métalliques pouvant être en outre nitrurés).

II peut aussi s'agir d'une couche réfléchissante à base d'au moins un nitrure métallique tel que le nitrure de titane TiN, le nitrure de zirconium ZrN, le nitrure d'hafnium HfN.

Des couches réfléchissantes répondant à cette définition et particulièrement préférées dans le cadre de l'invention sont des couches à base d'argent, notamment incorporées dans un empilement du type :
diélectrique / argent / diélectrique ou
diélectrique / argent / diélectrique / argent / diélectrique,
avec éventuellement entre la couche d'argent et au moins une des couches de diélectrique adjacentes de fines couches à base de métal partiellement ou totalement oxydé destinées à jouer le rôle de couches de nucléation et/ou de couches-barrière face à l'oxydation notamment.

Pour plus de détails, on se reportera avantageusement, notamment, aux brevets EP-506 507, EP-611 213, EP-636 587, EP-638 528, EP-645 352, EP-678 484, EP-709 349, EP-718 250.

Un autre vitrage de couche réfléchissante préféré selon l'invention répondant à cette définition est une couche à base d'alliage Ni-Cr ou à base d'alliage Ni-Cr-Fe du type acier, alliages éventuellement nitrurés, ou à base de tantale. Cette couche se trouve disposée entre deux couches d'oxyde ou de nitrure du type Ta₂O₅, SnO₂, TiO₂, TiN, comme cela est notamment décrit dans le brevet EP-511 901.

Il peut aussi s'agir de couche à base de TiN, associée à au moins une autre couche d'oxyde du type TiO₂ ou SiOₓC_{y}, comme cela est notamment décrit dans les brevets EP-638 527 et EP-650 938.

On trouvera également une description de couche réfléchissante à base de silicium associée à une seconde couche d'oxyde dans le brevet FR-2 391 173.

Comme autre type de couche réfléchissante, on comprend également les couches à base d'oxyde(s) métallique(s) éventuellement dopé(s), notamment à base d'oxyde de titane, comme le revêtement des vitrages commercialisés sous la dénomination « Antelio » par Saint-Gobain Vitrage, ou à base d'oxyde d'étain dopé au fluor SnO₂:F ou d'oxyde d'indium dopé à l'étain ITO. Pour plus de détails, on pourra se reporter, notamment, au brevet FR-2 310 977 pour la description du mode d'obtention d'une couche d'oxyde de titane, ou aux brevets EP-544 577, EP-573 325, EP-648 196 correspondant à la demande PCT WO 94-25 410 pour la description d'empilements de couches incorporant une couche de SnO₂:F. On peut noter en outre que si l'on choisit une couche réfléchissante à base d'oxyde de titane qui soit au moins partiellement cristallisée sous forme anatase ou anatase/rutile, ce type de couche présente également des propriétés à la fois photocatalytiques et d'hydrophilie qui lui confèrent des propriétés anti-buée et/ou anti-salissure particulièrement intéressantes si on la dépose sur une des faces extérieures du vitrage. On pourra se reporter avantageusement au brevet FR 95/10 839 déposé le 15 Septembre 1995 pour plus de détails.

En fait, une fois le choix du matériau de la couche réfléchissante effectué, il est ensuite nécessaire d'en optimiser l'épaisseur en fonction de l'effet voulu, notamment en fonction du degré de « filtrage », des rayonnements solaires qui est requis ou de la modification d'aspect optique qui est recherchée.

L'invention s'applique à différents types de vitrages actifs, du type électrochimique ou du type photochrome. Il peut s'agir, comme on l'a vu, de vitrages à transmission/absorption lumineuse variable, notamment à système viologène ou électrochrome, notamment du type de ceux décrits dans les brevets précités EP-0 338 876, EP-0 408 427, EP-0 575 203, EP-0 628 849. Il se présente de préférence sous la forme d'un empilement de couches fonctionnelles comprenant successivement une couche électroconductrice de préférence transparente, une couche électrochrome dite cathodique susceptible d'insérer réversiblement des cations tels que H⁺, Li⁺, Na⁺, Ag⁺, une couche d'électrolyte, éventuellement une contre-électrode sous la forme d'une seconde couche électrochrome dite anodique également susceptible d'insérer réversiblement des cations et enfin une seconde couche électroconductrice.

En ce qui concerne la nature des couches électroconductrices du dispositif, il y a deux variantes possibles : on peut avoir recours à des matériaux à base d'oxyde métallique dopé tels que de l'oxyde d'étain dopé au fluor SnO₂:F ou l'oxyde d'indium dopé à l'étain ITO. On peut aussi utiliser des couches en métal ou en alliage métallique, par exemple à partir d'or Au, d'argent Ag ou d'aluminium Al. Le dispositif possédant généralement deux couches électroconductrices, elles peuvent être soit toutes les deux métalliques, soit toutes les deux à base d'oxyde dopé, soit l'une à base de métal et l'autre à base d'oxyde dopé.

Pour constituer la couche de matériau électrochrome cathodique, on peut choisir un matériau ou un mélange de matériaux choisi(s) dans le groupe comprenant l'oxyde de tungstène WO₃, l'oxyde de molybdène MoO₃, l'oxyde de vanadium V₂O₅, l'oxyde de niobium Nb₂O₅, l'oxyde de titane TiO₂, un matériau « cermet » (association de matériau métallique et céramique, notamment sous la forme de particules métalliques dans une matrice céramique) tel que WO₃/Au ou WO₃/Ag, un mélange d'oxydes de tungstène et de rhénium WO₃/ReO₃. Ces matériaux conviennent notamment en cas d'insertion réversible d'ions lithium. Dans le cas où le dispositif fonctionne par insertion réversible de protons, on peut utiliser les mêmes matériaux, mais hydratés cette fois.

Pour constituer la couche de matériau électrochrome anodique, on peut choisir un matériau qui répond à la formule MₓA_{y}U_{z}, avec M un métal de transition, A l'ion utilisé pour l'insertion réversible, par exemple un alcalin ou un proton, et U un chalcogène tel que l'oxygène ou le soufre.

Il peut s'agir, notamment dans le cas d'une insertion d'ions protons H⁺, d'un composé ou d'un mélange de composés appartenant au groupe comprenant LiNiOₓ, IrOₓH_{y}, IrOₓH_{y}N_{z}, NiOₓ, NiOₓH_{y}N_{z}, RhOₓ, CoOₓ, MnOₓ. Dans le cas d'une insertion réversible d'ions lithium Li⁺, on choisit plutôt un composé ou un mélange de composés appartenant au groupe comprenant LiNiOₓ, LiMn₂O₄, IrOₓ, LiₓIrO_{y}, NiOₓ, CeOₓ, TiOₓ, CeOₓ-TiOₓ, RhOₓ, CoOₓ, CrOₓ, MnOₓ.

En ce qui concerne le choix du matériau électrolyte, il y en a en fait de deux types comme cela a été évoqué précédemment.

Il peut s'agir d'une couche de liquide aqueux, tel que de l'eau additionnée d'acide sulfurique ou phosphorique dans le cas d'une insertion réversible de protons, d'une couche de liquide anhydre tel que du carbonate de propylène contenant un sel de lithium dans le cas d'une insertion réversible d'ions lithium. Il peut aussi s'agir d'une couche de gel ou de polymère, notamment des polymères conducteurs protoniques du type solution solide de polyoxyéthylène et d'acide phosphorique POE-H₃PO₄ (dans ce cas, le polymère constitue également un isolant électronique) ou encore à base d'un polymère obtenu par copolymérisation de trois précurseurs comprenant deux types de trialkoxysilanes greffés et un plastifiant présentant au moins un groupement urée. En tant que polymère conducteur d'ions lithium, on peut choisir un ionomère obtenu par neutralisation partielle d'acide polyacrylique, ou un polymère à base de polyéthylène imine branchée et d'un sel de lithium. Pour plus de détails sur la nature et la synthèse de tels produits polymériques, on se reportera avantageusement aux brevets cités en préambule de la présente demande.

Mais il peut aussi s'agir d'un électrolyte sous la forme d'un matériau solide, notamment à base d'oxyde métallique. Selon une variante de l'invention, le système est choisi tel qu'il ne contient que des couches en matériau solide. Dans le contexte de l'invention, on entend par « matériau solide » tout matériau ayant la tenue mécanique d'un solide, en particulier tout matériau essentiellement minéral ou organique ou tout matériau hybride, c'est-à-dire partiellement minéral et partiellement organique, comme les matériaux que l'on peut obtenir par dépôt sol-gel à partir de précurseurs organominéraux. On a alors une configuration de système dit « tout solide » qui présente un avantage en termes de facilité de fabrication. En effet, quand le système contient un électrolyte sous forme de polymère qui n'a pas la tenue mécanique d'un solide, par exemple, cela contraint à fabriquer en fait, en parallèle, deux « demi-cellules » constituées chacune d'un substrat porteur revêtu d'une première couche électroconductrice puis d'une seconde couche électrochimiquement active, ces deux demi-cellules étant ensuite assemblées en insérant entre elles l'électrolyte. Avec une configuration « tout solide », la fabrication est simplifiée, puisque l'on peut déposer l'ensemble des couches du système, l'une après l'autre, sur un unique substrat porteur. On allège ainsi l'ensemble système électrochrome/substrat porteur, puisque l'on peut alors se contenter d'un unique substrat porteur au lieu de deux habituellement.

En outre, que l'électrolyte soit « solide » ou non, il peut comprendre une couche en un matériau conducteur ionique susceptible d'insérer de manière réversible les ions mais dont le degré d'oxydation est maintenu essentiellement constant. Il peut s'agir notamment d'un matériau à propriétés électrochromes, comme décrit dans le brevet FR-96/03799 précité.

Le système à transmission/absorption lumineuse variable de l'élément selon l'invention peut donc se trouver disposé soit entre deux substrats rigides, soit sur un seul substrat rigide plus particulièrement dans le cas d'un système « tout solide ». Les substrats porteurs rigides sont de préférence en verre, en polymère acrylique, en polycarbonate ou en certains polyuréthanes.

Quelle que soit la configuration adoptée, il peut en outre être prévu de feuilleter le substrat porteur ou au moins un des substrats porteurs du système électrochrome par l'intermédiaire d'une feuille de polymère d'assemblage du type PVB (polyvinylbutyral), EVA (éthylènevinylacétate), PU (polyuréthane).

Au moins un des substrats porteurs peut également être associé à un autre substrat rigide par l'intermédiaire d'une lame de gaz intercalaire. Le vitrage devient alors un vitrage multiple à propriétés d'isolation thermique renforcées, notamment un double-vitrage. Cette structure feuilletée peut être montée en double-vitrage isolant, avec alors par exemple la séquence verre 1/revêtement réfléchissant/feuille de polymère d'assemblage/verre 2/système électrochrome/verre 3/lame de gaz intercalaire/verre 4. (Cette configuration de vitrage multiple peut aussi être adoptée quand le système électrocommandable est du type à cristaux liquides).

De préférence, le revêtement réfléchissant est disposé sur la face d'un des substrats porteurs opposée à celle tournée du côté du système actif (électrochrome) ou sur l'une des faces de l'un des autres substrats constitutifs du vitrage. On peut ainsi avoir un vitrage présentant la séquence :

verre 1/ revêtement réfléchissant / feuille de polymère d'assemblage / verre 2/ système électrochrome / verre 3. Ce revêtement réfléchissant peut alternativement se trouver sur la face du verre 2 tournée vers la feuille de polymère d'assemblage, ou sur la face extérieure du verre 1 s'il présente une durabilité mécanique et chimique suffisantes. Cette structure feuilletée peut être montée en double-vitrage isolant, avec alors, par exemple, la séquence verre 1 / revêtement réfléchissant / feuille de polymère d'assemblage / verre 2 / système électrochrome / verre 3 / lame de gaz intercalaire / verre 4.

Le vitrage selon l'invention peut également être choisi à diffusion lumineuse variable, notamment en incorporant les systèmes dits à valves optiques ou à cristaux liquides qui ont été précédemment décrits. Dans le cas des systèmes à cristaux liquides, on choisit judicieusement la nature de la matrice polymérique et des cristaux de façon à ce que l'indice ordinaire des cristaux liquides nₒ soit égal à l'indice du polymère nₚ.

Qu'il s'agisse de valves optiques ou de systèmes à cristaux liquides, les systèmes se présentent tout deux sous la forme d'un film composite à base de polymère. Afin d'assurer son alimentation électrique, on le dispose usuellement entre deux couches électroconductrices, notamment transparentes et du type de celles utilisées pour les systèmes électrochromes précédemment décrits.

A noter par ailleurs que les gouttelettes de cristaux liquides du composite polymère-cristaux liquides peuvent également contenir un colorant ou un mélange de colorants, notamment sous la forme de colorants dichroïques qui sont des colorants présentant une anisotropie d'absorption orientable par les cristaux liquides.

En outre, le film avec ses deux couches conductrices est usuellement muni sur au moins une de ses faces, et de préférence chacune d'entre elles, d'un substrat porteur. Celui-ci est généralement transparent. Il peut être choisi rigide ou semi-rigide, par exemple être en verre, polymère acrylique du type polyméthacrylate de méthyle PMMA ou en polycarbonate PC. Il peut aussi être flexible, notamment en polyéthylène téréphtalate PET ou à base de certains polycarbonates flexibles. On peut avoir ainsi une structure du type PET/ITO/composite polymère-cristaux liquides/ITO/PET, qui se présente sous la forme d'une feuille souple aisément manipulable. Cet ensemble (composite + couches électroconductrices + au moins un substrat porteur) peut ensuite être feuilleté à au moins un substrat rigide transparent du type verre à l'aide d'au moins une couche de polymère organique d'assemblage du type polyvinylbutyral PVB, éthylènevinylacétate EVA ou certains polyuréthanes PU.

Selon une configuration préférée de ce type de vitrage à diffusion lumineuse variable, le revêtement réfléchissant selon l'invention est disposé sur la face d'un des substrats porteurs tournée du côté du système à cristaux liquides. Mais il peut aussi être disposée sur la face opposée, ou sur l'une des faces de l'un des autres substrats constitutifs du vitrage. Le vitrage peut ainsi présenter la séquence :
verre (1) / revêtement réfléchissant / feuille de polymère d'assemblage / feuille de polymère flexible / système à cristaux liquides / feuille de polymère flexible / feuille de polymère d'assemblage / verre (2). Comme dans le cas du vitrage électrochrome, le revêtement réfléchissant peut alternativement se trouver, notamment, sur la face extérieure du verre 1.

Qu'il s'agisse d'un système électrocommandable du type électrochrome ou du type à cristaux liquides, on peut choisir une configuration de double vitrage telle que le(s) substrat(s) porteur(s) du système électrocommandable soit(ent) séparé(s) du substrat muni du revêtement réfléchissant selon l'invention par une lame de gaz intercalaire. On a alors un vitrage du type : verre 1 / revêtement réfléchissant / lame de gaz intercalaire / système électrocommandable associé à au moins un verre 2.

Quel que soit le type de vitrage électrocommandable envisagé, on peut vouloir lui conférer une propriété supplémentaire de diminution de sa transmission lumineuse et/ou énergétique, en vue de proposer un vitrage présentant des propriétés anti-solaires renforcées ou encore un confort visuel amélioré, un effet anti-éblouissement ou un aspect colorimétrique donné. Dans ce cas, l'un au moins des substrats du vitrage peut être choisi absorbant sur le plan lumineux et/ou énergétique, notamment sous la forme d'un substrat teinté dans la masse de manière plus ou moins prononcée. Si l'on utilise le revêtement réfléchissant comme protection du système électrocommandable vis-à-vis du rayonnement solaire, il est bien sûr préférable de configurer le vitrage de facon à ce que le substrat teinté dans la masse se trouve séparé du substrat en contact avec le revêtement réfléchissant par au moins le système électrocommandable, par exemple avec une séquence du type :
verre clair 1 / revêtement réfléchissant / ... / système électrocommandable du type à cristaux liquides / ... / verre teinté 3, les pointillés représentant au moins un matériau du type substrat rigide, feuille de polymère d'assemblage ou lame de gaz intercalaire.

En montant le vitrage dans un bâtiment ou un véhicule de façon à ce que ce soit le verre clair qui soit tourné vers l'extérieur, on évite au système électrocommandable en contact avec un verre absorbant de s'échauffer :
□ Quand le système électrocommandable est à absorption variable, comme c'est le cas d'un système électrochrome, il est en effet susceptible de s'échauffer par fort ensoleillement par un phénomène d'absorption énergétique, lorsqu'il est à l'état coloré, d'où l'intérêt du revêtement réfléchissant selon l'invention, (la même remarque s'applique aux photochromes),
□ Quand le système électrocommandable est du type à cristaux liquides ou quand il s'agit d'un système à absorption variable du type électrochrome qui se trouve à l'état décoloré, il vaut mieux éviter qu'il se trouve au contact d'un verre teinté soumis directement à l'ensoleillement, pour empêcher qu'il ne s'échauffe à ce contact, même s'il n'est pas lui-même absorbant.

Des vitrages teintés dans la masse, notamment adaptés au bâtiment, sont par exemple commercialisés sous l'appellation « Parsol » par la société SAINT-GOBAIN VITRAGE. D'autres types de verre à transmission énergétique réduite sont également intéressants dans la cadre de la présente invention :

II s'agit notamment de verres de couleur bronze, comme décrits dans les brevets US-4 190 542 et US-4 101 705, ou de verres dont la composition a été ajustée plutôt en vue d'une application vitrage automobile. Il s'agit par exemple de verre appelés TSA⁺ ou TSA⁺⁺, dont les taux en oxydes colorants du type Fe₂O₃, FeO et CoO sont ajustés afin d'avoir une sélectivité définie par le rapport T_{L}/T_{E} d'au moins 1,30, ou même 1,40 à 1,50, et une teinte dans les verts. On se reportera avantageusement pour plus de précisions à la demande de brevet européen EP-A-0 616 883. On rappelle sommairement ci-dessous le taux des oxydes colorants précités dans les compositions de verre selon l'enseignement de ce brevet (proportions pondérales).

Selon une première série :

| | |
|---|---|
| Fe₂O₃ | 0,55 à 0,62 % |
| FeO | 0,1 à 0,16% |
| CoO | 0 à 12 ppm, notamment < 12 ppm avec notamment le rapport Fe²+/Fe de l'ordre de 0,19 à 0,25. |

Selon une seconde série :

| | |
|---|---|
| Fe₂O₃ | 0,75 à 0,90 % |
| FeO | 0,15 à 0,22 % |
| CoO | 0 à 17 ppm, notamment < 10 ppm avec notamment le rapport Fe²⁺/Fe de l'ordre de 0,20. |

II peut également s'agir de verres teintés dans la masse, notamment dans les bleu-vert tels que ceux décrits dans la demande de brevet EP-A-0 644 164, dont on rappelle ci-après la composition :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ | 0,75 à 1,4 % |
| (fer total exprimé sous cette forme) | |
| FeO | 0,25 à 0,32 % |
| SO₃ | 0,10 à 0,35 % |

II peut également s'agir de verres tels que ceux décrits dans la demande PCT déposée sous le numéro PCT/FR95/00828 le 22 juin 1995 correspondant à la demande FR-A-2 721 599, dont la composition, toujours en pourcentages pondéraux, est rappelée ci-dessous :

| | |
|---|---|
| SiO₂ | 69 à 75 % |
| Al₂O₃ | 0 à 3 % |
| B₂O₃ | 0 à 5 % |
| CaO | 2 à 10 % |
| MgO | 0 à 2 % |
| Na₂O | 9 à 17 % |
| K₂O | 0 à 8 % |
| Fe₂O₃ (fer total) | 0,2 à 4 % |
| Se, CoO, Cr₂O₃, NiO, CuO | 0 à 0,45 % |

la teneur en agents colorants autres que le fer étant au moins égale à 0,0002 % lorsque la teneur en Fe₂O₃ est égale ou inférieure à 1,5 %, cette composition étant susceptible de contenir également du fluor, des oxydes de zinc, de zirconium, de cérium, de titane et moins de 4 % d'oxyde de baryum, la somme des pourcentages des oxydes alcalino-terreux demeurant égale ou inférieure à 10 %.

Toujours selon l'enseignement de ce brevet, il est préféré que les agents colorants autres que le fer soient introduits dans la composition des verres seuls ou en combinaison, selon des teneurs pondérales qui, de préférence, restent inférieures aux limites suivantes :
Se < 0,008 %
CoO < 0,04 %
Cr₂O₃ < 0,1 %
NiO < 0,07 %
CuO < 0,3 %.

Il peut aussi s'agir de verres tels que ceux décrits dans la demande PCT/FR96/00394 déposée le 14 mars 1996 et correspondant à la demande de brevet français déposée le 16 mars 1995 sous le numéro 95/03858, verres comprenant, exprimé en pourcentages pondéraux, de 0,85 à 2% de fer total exprimé sous la forme Fe₂O₃, la teneur pondérale en FeO étant comprise entre 0,21 et 0,40%.

Selon ce brevet, les compositions sont, selon une première série, les suivantes :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 0,85 à 2 % |
| FeO | 0,21 à 0,40 % |
| CoO, Cr₂O₃, Se, TiO₂, MnO, NiO, CuO | 0 à 0,04 % |
| SO₃ | 0,08 à 0,35 % |

et selon une seconde série, les suivantes :

| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃(fer total exprimé sous cette forme) | 0,95 à 2 % |
| CoO, Cr₂O₃, Se, TiO₂, MnO, NiO, CuO | 0 à 0,04 % |
| FeO | 0,29 à 0,40 % |
| SO₃ | 0,08 à 0,35 % |

II peut également s'agir d'un verre teinté conformément à l'enseignement du brevet EP-0 452 207, dont la composition est généralement la suivante, en proportions pondérales :

| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18 % |
| K₂O | 0 à 5 % |

la somme des oxydes alcalins terreux étant comprise entre 6 et 16 % et celles des oxydes alcalins entre 10 et 20 % et comprenant à titre d'agents colorants:

| | |
|---|---|
| Fe₂O₃ (fer total) | 1,4 à 4 % |
| CoO | 0 à 0,05 % |

avec CoO > à environ 0,02 % lorsque Fe₂O₃ < à environ 2 %, ainsi qu'éventuellement du sélénium et de l'oxyde de chrome, la somme CoO + Se + Cr₂O₃ pouvant atteindre 0,24 %, ce verre ayant un facteur de transmission lumineuse globale sous illuminant A (TL_{A}) égal ou inférieur à environ 20 % et un facteur de transmission énergétique globale (T_{E}) inférieur ou égal à environ 12 % pour une épaisseur de 3,85 mm.

On peut citer également les verres teintés dont la composition répond à celle définie dans le brevet WO 93/07095, de la façon suivante, toujours en proportions pondérales :

| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18 % |
| K₂O | 0 à 5 % |

et, à titre d'agents colorants :

| | |
|---|---|
| Fe₂O₃ (fer total) | 0,45 à 2,5 % |
| CoO | 0,001 à 0,02 % |
| Se | 0 à 0,0025 % |
| Cr₂O₃ | 0 à 0,1 % |

un tel verre ayant un facteur de transmission énergétique globale (T_{E}) inférieur au facteur de transmission lumineuse sous illuminant A (TL_{A}), le facteur T_{E} étant compris entre 10 et 48 % et le facteur TL_{A} entre 20 et 60 % pour une épaisseur de 3,85 millimètres.

Tous ces types de compositions de verre teinté peuvent donc être avantageusement choisis de manière à ce que les vitrages présentent des valeurs de transmission énergétique comprises entre 6 et 70%, notamment entre 20 et 60% et des valeurs de transmission lumineuse comprises entre 10 et 85%.

L'invention a également pour objet l'utilisation des vitrages précédemment décrits en tant que vitrages pour le bâtiment, notamment en tant que vitrages extérieurs, vitrages de cloison intérieure ou portes vitrées, et en tant que vitrages équipant des moyens de transport, notamment des vitrages automobiles tels que des toits-autos, des vitrages ferroviaires ou des vitrages d'avion, notamment en tant que pare-brise ou bandeaux anti-solaires de pare-brise.

Ces vitrages peuvent présenter une structure « monolithique », c'est-à-dire avec un seul substrat rigide, ou une pluralité de substrats rigides, avoir une structure feuilletée et/ou de vitrage multiple, ou encore une structure dite de vitrage asymétrique à couche plastique extérieure, notamment à base de polyuréthane à propriétés d'absorption d'énergie, structure notamment décrite dans les brevets EP-191 666, EP-190953, EP-241 337, EP-344045, EP-402 212, EP-430 769 et EP-673 757.

On peut aussi utiliser les vitrages de l'invention en tant que miroirs, en ajustant la nature et l'épaisseur du revêtement réfléchissant, et plus particulièrement en tant que miroirs sans tain que l'on peut également qualifier de « miroirs-espions » : si l'on remplace le tain du miroir par un système à diffusion lumineuse variable du type à cristaux liquides, non seulement un observateur dans un local peut observer l'intérieur d'un local adjacent sans qu'une personne qui se trouve dans ce local adjacent s'en aperçoive, mais en plus l'observateur peut, s'il le désire, empêcher une personne entrant dans le local où il se trouve de se rendre compte qu'il s'agit d'un miroir sans tain, en rendant le vitrage diffusant.

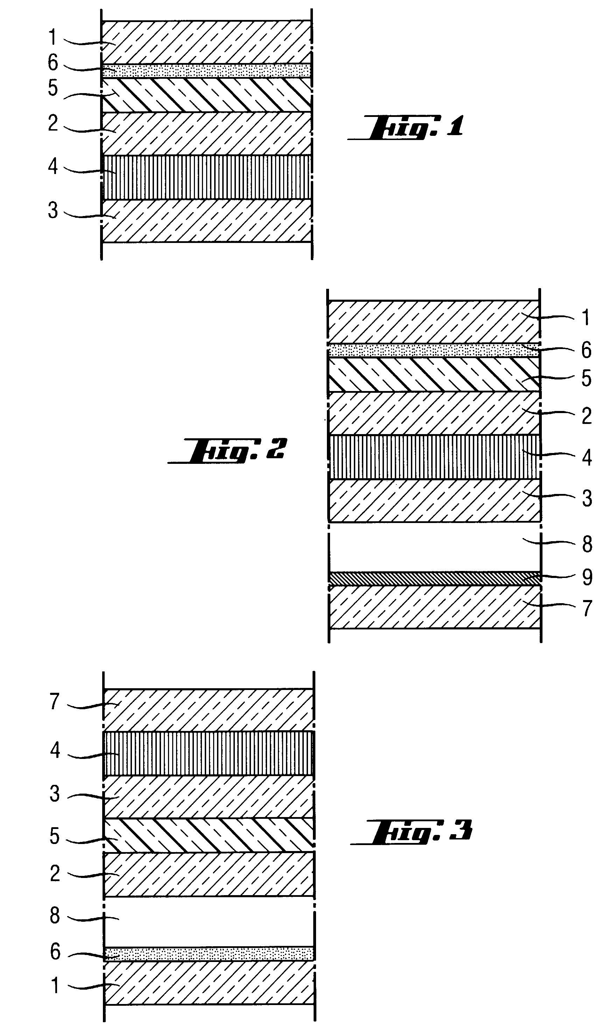

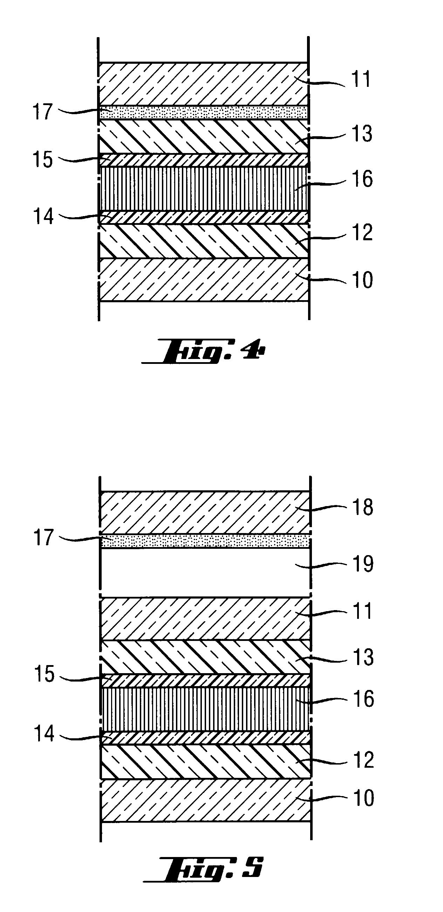

D'autres détails et caractéristiques avantageuses de l'invention ressortent de la description faite ci-après en référence aux dessins annexés qui représentent :
□ **figure 1** : un vitrage électrochrome à structure feuilletée en coupe,
□ **figure 2** : un vitrage électrochrome selon la figure 1 monté en double vitrage,
□ **figure 3** : un vitrage électrochrome monté en double vitrage selon une autre configuration.
□ **figure 4** : un vitrage à cristaux liquides en coupe.
□ **figure 5** : un vitrage à cristaux liquides monté en double-vitrage.

Ces figures sont extrêmement schématiques et ne respectent pas les proportions entre les différents éléments représentés, ceci afin d'en faciliter la lecture. Ne sont pas représentées, notamment, toutes les connexions électriques qui sont connues en soi.

Les substrats rigides utilisés pour tous les exemples suivants sont des substrats en verre silico-sodo-calcique de 4 mm d'épaisseur. (leur épaisseur peut en fait être choisie notamment dans la gamme des 3 à 6 mm).

Par la suite, les substrats dits en verre « clair » , sont des verres commercialisés par SAINT-GOBAIN VITRAGE sous la dénomination Planilux. Les substrats dits de verre « teinté » sont des verres présentant, à environ 4 mm d'épaisseur, des valeurs de T_{L} de 35 % et de T_{E} de 18,7 % sous illuminant D₆₅. Leur composition chimique est définie par celle de l'exemple 2 du brevet WO 93/07095 pré-cité, qui comprend, en taux pondéral, les oxydes suivants agissant sur la coloration:

| | |
|---|---|
| Fe₂O₃ (fer total) | 1,65 % |
| Co | 0,0110 % |

Les exemples 1 à 4 se rapportent aux figures 1 à 3 et concernent des vitrages électrochromes.

### EXEMPLE 1

La figure 1 représente un vitrage électrochrome à structure feuilletée à trois verres, dans une configuration adaptée par exemple à une utilisation en tant que toit-auto : sont représentés deux verres clairs 2,3 entre lesquels est disposé un système électrochrome 4 constitué de l'empilement de couches fonctionnelles suivants (empilement conforme à l'enseignement du brevet européen EP-0 628 849) :
□ une première couche électroconductrice en SnO₂:F de 300 nm,
□ une première couche de matériau électrochrome anodique en oxyde d'iridium hydraté de 55 nm, (elle pourrait être remplacée par une couche en oxyde de nickel hydraté),
□ une couche en oxyde de tantale hydraté Ta₂O₅.Hₓ de 70 nm à fonction de protection,
□ une couche d'électrolyte en solution solide de polyoxyéthylène avec de l'acide phosphorique POE-H₃PO₄ de 100 micromètres,
□ une seconde couche de matériau électrochrome cathodique à base d'oxyde de tungstène de 350 nm,
□ une seconde couche de SnO₂:F de 300 nm.

L'ensemble verre 2 + système électrochrome 4 + verre 3 est ensuite feuilleté à un troisième verre clair 1 par l'intermédiaire d'une feuille 5 de polymère organique d'assemblage du type PVB d'une épaisseur de 0,5 à 1mm, notamment de 0,75mm. Sur la face du verre 1 tournée du côté de la feuille de PVB 5 est disposé un revêtement réfléchissant 6 constitué de l'empilement de couches minces suivant, à partir du verre 1 :
□ une couche de SnO₂ de 41 nm,
□ une première couche d'argent de 18 nm,
□ une couche de SnO₂ de 74 nm,
□ une seconde couche d'argent de 12 nm,
□ une couche de SnO₂ de 33 nm.

En outre, de part et d'autre de chacune des couches en argent, on dispose une fine couche métallique à base de Ni-Cr, d'environ 0,5 à 1,5 nm.

Ce type d'empilement est, de manière connue, obtenue par une technique de pulvérisation cathodique assistée par champ magnétique, les couches de Ni-Cr permettant de protéger les couches d'argent de l'oxydation lors du dépôt des couches de SnO₂ par pulvérisation réactive en présence d'oxygène, en s'oxydant partiellement ou totalement à leur place.

Pour d'autres types d'empilements équivalents du type (diélectrique / argent)ₙ, avec n ≥ 1, on se reportera avantageusement aux brevets cités en préambule. (Ainsi, on peut utiliser d'autres matériaux diélectriques que l'oxyde d'étain, par exemple TiO₂, ZnO, Nb, Ta₂O₅, Si₃N₄, ... ou une superposition de matériaux diélectriques comme SnO₂/Nb₂O₅, Nb₂O₅/ZnO, SnO₂/Ta₂O₅, ... De même, les couches barrières en Ni-Cr sont optionnelles, et peuvent être substituées, par exemple, par des couches en métal du type Ti, Ta, Nb, Zn, Sn, ...).

Un tel vitrage est monté de préférence de manière à ce que le verre 1 soit tourné vers l'extérieur. Ainsi, le système électrochrome 4 se trouve protégé du rayonnement solaire à la fois par la feuille 4 de PVB, qui, de préférence, contient des agents filtrant les ultraviolets, et surtout par le revêtement 5 réfléchissant selon l'invention. Ce revêtement, qui a recours à deux couches réfléchissantes, est particulièrement efficace dans son rôle de filtre solaire. Cela est d'autant plus important quand on utilise ce vitrage en tant que toit-auto, c'est-à-dire en position horizontale qui est une configuration sollicitant particulièrement le système électrochrome en terme de tenue à la température, ou même en position inclinée par rapport à la verticale, si on veut l'utiliser comme vitrage de verrière, fenêtre de toit de type velux,...

### EXEMPLE 2

Il correspond à la configuration de vitrage électrochrome représenté à la figure 2 : on retrouve les verres 1, 2, 3 de la figure 1 ainsi que la même feuille de PVB 5, le même revêtement réfléchissant 6 et le même système électrochrome 4. Cet ensemble tri-verre a été monté en double vitrage à l'aide d'un quatrième verre clair 7 par l'intermédiaire d'une lame d'argon 8 de 12 mm d'épaisseur, à l'aide de moyens d'assemblage connus du domaine des doubles vitrages et non représentés.

Sur la face du verre 7 tournée vers la lame d'argon 8, est disposé un revêtement 9 à propriétés de bas-émissivité, du type de ceux dont sont munis les vitrages commercialisés sous le nom de Planitherm par SAINT-GOBAIN VITRAGE, soit l'empilement suivant :
□ une couche d'oxyde d'étain de 40 nm,
□ une couche d'argent de 9 nm,
□ une couche d'oxyde d'étain de 40 nm,
avec, comme pour l'empilement 6 précédemment décrit, la présence de deux fines couches de Ni-Cr de 0,5 à 1,5 nm destinées à protéger l'argent de l'oxydation. Ce type de double vitrage est notamment utilisable en tant que vitrage extérieur équipant des façades de bâtiment (comme décrit dans le brevet EP-0 575 207), ou dans des verrières, vérandas ou fenêtres de toit.

Deux avantages découlent de ce type de structure : d'un point de vue esthétique, lorsque tous les vitrages de la façade sont mis à l'état coloré, la présence du revêtement réfléchissant 6 confère à la façade , côté extérieur, un aspect réfléchissant esthétique, et que l'on peut préférer à l'aspect relativement foncé et absorbant qu'auraient ces vitrages vus de l'extérieur sans le revêtement réfléchissant en question.

Du point de vue de la protection thermique, le montage selon les figures 1 et 2 protège efficacement le vitrage électrochrome contre un échauffement excessif.

Le second revêtement du type bas-émissif 9 à base d'une couche d'argent (qui pourrait alternativement être en SnO₂:F par exemple) ne contribue pas à l'effet de protection vis-à-vis du système électrochrome. Il est optionnel, mais sa présence permet d'améliorer les propriétés d'isolation thermique propres à une structure de double vitrage, notamment en diminuant son coefficient K (le coefficient K représente le flux de chaleur qui traverse 1 m² de paroi pour une différence de température de 1 degré entre l'intérieur et l'extérieur du local).

Le tableau 1 ci-dessous regroupe pour les exemples 1 et 2, en référence à l'illuminant D₆₅, les valeurs spectrophotométriques suivantes à l'état coloré minimum EC et à l'état décoloré maximal ED : la transmission lumineuse T_{L}, la transmission énergétique T_{E}, l'absorption énergétique AE, en pourcentages, le coefficient K en W.m⁻².°K⁻¹, le facteur solaire FS défini par le rapport entre l'énergie totale entrant dans le local à travers le vitrage et l'énergie solaire incidente, sans unité.

Figurent également dans le tableau un exemple 2bis, correspondant à la configuration de l'exemple 2 mais dépourvue du revêtement bas-émissif 9, et un exemple 2ter qui, à titre de comparaison, correspond également à la configuration de l'exemple 2 mais dépourvue du revêtement réfléchissant 6 selon l'invention.

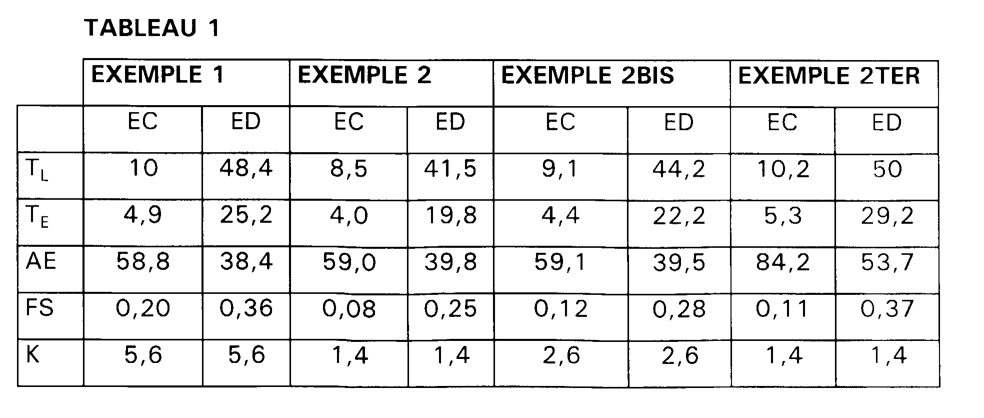

De ce tableau, on voit que la suppression de l'empilement bas-émissif 9 dans l'exemple 2bis par rapport à l'exemple 2 permet d'augmenter de 3% la valeur minimale de T_{L} du vitrage sans affecter son absorption énergétique, mais un peu au détriment du coefficient K et du facteur solaire FS. Le choix de l'une ou l'autre des configurations dépendra de l'application visée, du climat...

On peut aussi noter, de la comparaison des exemples 2 et 2ter, que la présence du revêtement réfléchissant de l'exemple 2 ne pénalise pas le contraste et que très légèrement la transmission lumineuse du vitrage, mais que, par contre, il permet de diminuer très significativement son absorption énergétique.

Par ailleurs, pour chacune des configurations des exemples 1 et 2, on a mesuré la température maximale de surface des vitrages en comparaison avec des vitrages identiques mais dépourvus du revêtement protecteur 6, lorsque ceux-ci sont soumis, en position horizontale, à un ensoleillement correspondant à une énergie de 850 W/m², on constate que la température maximale des vitrages selon les exemples 1 et 2, à l'état coloré, est d'au plus 69°C, alors qu'elle est de 83°C en l'absence de revêtement 5. Cette différence de 14°C est loin d'être négligeable, car elle permet d'augmenter la durée de vie des vitrages électrochromes.

A noter par ailleurs que si l'on choisit un système électrochrome 4 « tout solide », on peut avoir une structure de double vitrage plus « légère » que celle représentée en figure 2, notamment du type verre 1 / système électrochrome / lame de gaz / verre 2, le revêtement réfléchissant peut alors être disposé sur la face extérieure du verre 1, s'il présente la durabilité requise, par exemple s'il est à base de TiO₂, similaire au revêtement dont sont munis des vitrages commercialisés sous le nom d'Antélio par SAINT-GOBAIN VITRAGE.

### EXEMPLE 3

II correspond à la configuratin de la figure 3 qui représente un double-vitrage électrochrome ayant les mêmes composants (mais dépourvu de l'empilement bas-émissif 9) que celui de la figure 2, assemblés différemment.

Ici, le verre 1, c'est-à-dire celui destiné a être tourné vers l'extérieur une fois le vitrage monté, ne porte que le revêtement réfléchissant 6 et n'est pas feuilleté. On a donc le système électrochrome 4 entre les verres 7 et 3, le verre 3 étant feuilleté au verre 2 par l'intermédiaire de la feuille de PVB 5. L'ensemble des verres 2, 3 et 7 est ensuite monté en double vitrage par une lame d'argon 8 avec le verre 1 porteur du revêtement réfléchissant 6 sur sa face tournée vers la lame d'argon.

Beaucoup d'autres variantes, de vitrages électrochromes conformes à l'invention sont possibles, comme déjà évoqué plus haut. Ainsi on peut avoir la configuration de l'exemple 3, mais en supprimant le verre 2 et la feuille de PVB 5, c'est-à-dire en évitant de feuilleter le verre 3.

Si l'on adopte un système électrochrome 4 « tout solide », par exemple présentant l'empilement suivant :
- une couche électroconductrice en SnO_{2 :} F de 300 nm,
- une couche de matériau électrochrome cathodique en oxyde de tungstène de 380 nm,
- un électrolyte bi-couche se décomposant en une couche d'oxyde de tantale hydraté Ta₂O₅. nH₂O de 18 nm et une couche d'oxyde de tungstène hydraté WO₃.nH₂O de 200 nm,
- une couche de matériau électrochrome anodique à base d'oxyde d'iridium hydraté HₓIrO_{y} de 45 nm, (elle peut être remplacée par de l'oxyde de nickel hydraté),
- une couche électroconductrice en ITO de 200 nm,
on peut avoir une structure de double vitrage avec seulement deux verres, du type verre 1/revêtement réfléchissant 6/lame de gaz 8/système électrochrome 4/verre 2.

Les exemples 4 et 6 suivants se rapportent à un vitrage à cristaux liquides.

### EXEMPLE 4

Cet exemple se rapporte à un vitrage à cristaux liquides tel que représenté à la figure 4 :

II comporte deux verres clairs 10, 11, entre lesquels sont disposées deux feuilles de PVB de 0,75 mm 12, 13, entourant deux feuilles de polyéthylènetéréphtalate PET 14, 15 de 175 micromètres d'épaisseur entre lesquelles se trouve le système à cristaux liquides 16 de 25 micromètres d'épaisseur. En fait, la fabrication se fait en deux temps, d'abord la fabrication du film PET/ITO/composite polymère - cristaux liquides/ITO/PET, film que l'on feuillette ensuite aux verres 10 et 11 à l'aide des feuilles 12 et 13.

En outre, entre le verre 11 et la feuille de PVB 13, se trouve un revêtement réfléchissant 17 similaire au revêtement réfléchissant 5 à deux couches d'argent, mais avec des épaisseurs de couches d'argent différentes, l'empilement 17 est le suivant, (conformément à l'enseignement du brevet européen EP-638 528) :
□ une couche de SnO₂ de 34,4 nm,
□ une première couche d'argent de 12 nm,
□ une couche de SnO₂ de 98 nm,
□ une seconde couche d'argent de 18 nm,
□ une couche de SnO₂ de 35 nm,

En outre, de part et d'autre de chacune des couches d'argent, on dispose une fine couche métallique de Nb d'environ 1,5 nm.

Le système à cristaux liquides 16 comporte deux couches conductrices transparentes d'lTO de résistivité 100 ohms par carré déposées sur chacune des feuilles de PET, entre lesquelles se trouve un composite polymère-cristaux liquides transparent constitué par un polymère, dans lequel ont été préalablement dispersées des micro-gouttes de cristaux liquides nématiques, qui constitue l'émulsion de cristaux liquides. Le système à cristaux liquides utilisé est du type de ceux décrits dans les brevets WO-90/03593, US-5 206 747 et EP-0 409 442 et commercialisé par SAINT-GOBAIN VITRAGE sous la dénomination Priva-lite. Il fonctionne sous tension de 110V/50Hz : alimenté en électricité, il est transparent. Il devient diffusant lorsqu'on coupe l'alimentation électrique. A noter que si l'on introduit dans les gouttelettes de cristaux liquides des colorants dichroïques, le revêtement 17 sert, au moins partiellement, de filtre ultraviolet les protégeant. On peut renforcer cet effet ultraviolet en utilisant un verre, côté extérieur, à effet de filtre anti-ultraviolet.

### EXEMPLE 5

Cet exemple 5 concerne également un vitrage à cristaux liquides de type représenté à la figure 4, avec le même système 14, 15, 16 à cristaux liquides PET / ITO / composite polymère - cristaux liquides / PET / ITO, et le même revêtement réfléchissant 17. Par contre ici, le verre 11 ne fait que 2 mm d'épaisseur, et le second verre 10 est un verre teinté dans la masse comme défini plus haut de 4 mm d'épaisseur. En outre, les feuilles de PVB 12, 13 sont remplacées par des feuilles de 0,65 mm constituées de polyuréthane.

Les tableaux 3 et 4 ci-dessous regroupent, pour respectivement les exemples 4 et 5 les valeurs photométriques suivantes toujours selon l'illuminant D₆₅ et en référence à la norme ISO 9050 : T_{L} la transmission lumineuse en %, lambda dom (T) la longueur d'onde dominante en transmission en nm, pe (T) la pureté de couleur en transmission en %, T_{E} la transmission énergétique en %, la réflexion lumineuse « côté » substrat 11 R_{L}, ainsi que sa longueur d'onde dominante et sa pureté lambda dom (R_{L}) et pe (R_{L}), la réflexion lumineuse « coté » substrat 10 R'_{L}, ainsi que sa longueur d'onde dominante et sa pureté lambda dom (R'_{L}) et pe (R'_{L}). Sont également donnés et les facteurs solaires FS déjà explicités, ainsi que les valeurs d'absorption énergétiques AE et de flou FI, défini par le taux de diffusion lumineuse en %. Toutes ces données sont indiquées à l'état « ON », c'est-à-dire à l'état transparent quand le vitrage est alimenté en électricité, et à l'état « OFF », c'est-à-dire quand le vitrage n'est plus alimenté en électricité et qu'il est diffusant.

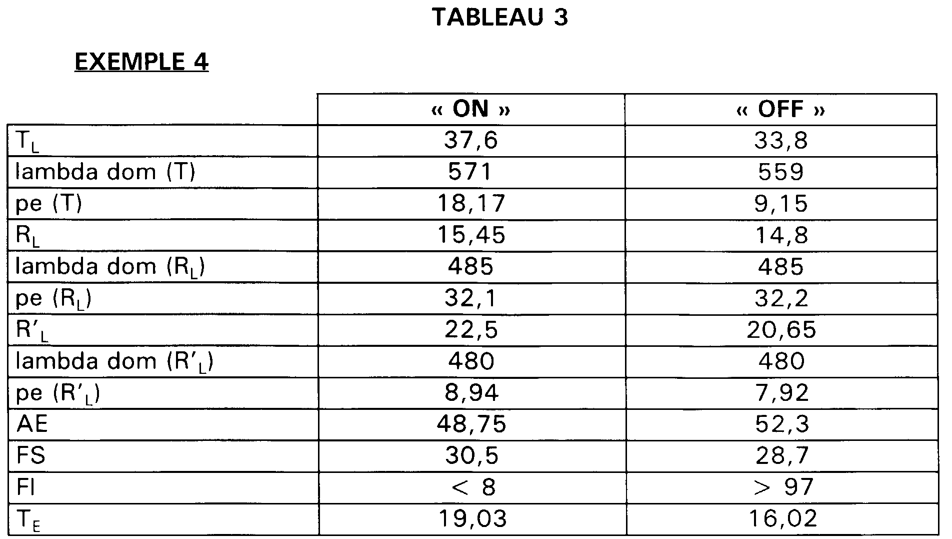

A titre de comparaison, on a mesuré les valeurs spectrophotométriques d'un vitrage de configuration identique à celui du vitrage de l'exemple 4, mais dépourvu du revêtement réfléchissant 17 selon l'invention : un tel vitrage présente une valeur de R_{L} identique à celle de R'_{L} et égale à 18,4% à l'état « ON » et à 16,5% à l'état « OFF ». De même, les longueurs d'onde dominantes des références R_{L} et R'_{L} sont identiques et égales à 491 nm, que le vitrage soit à l'état « OFF » ou à l'état « ON ». Les valeurs de pureté associées aux réflexions R_{L} et R'_{L} sont aussi identiques, et égales à 5,2% que le vitrage soit à l'état « OFF » ou à l'état « ON ». Son facteur solaire FS est de 67 à l'état « ON » et de 65 à l'état « OFF ». Sa transmission lumineuse est de 73,5% à l'état « ON » et de 70,8% à l'état « OFF », associée à une longueur d'onde dominante toujours égale à 569 nm et une pureté toujours égale à 4,3-4,4%.

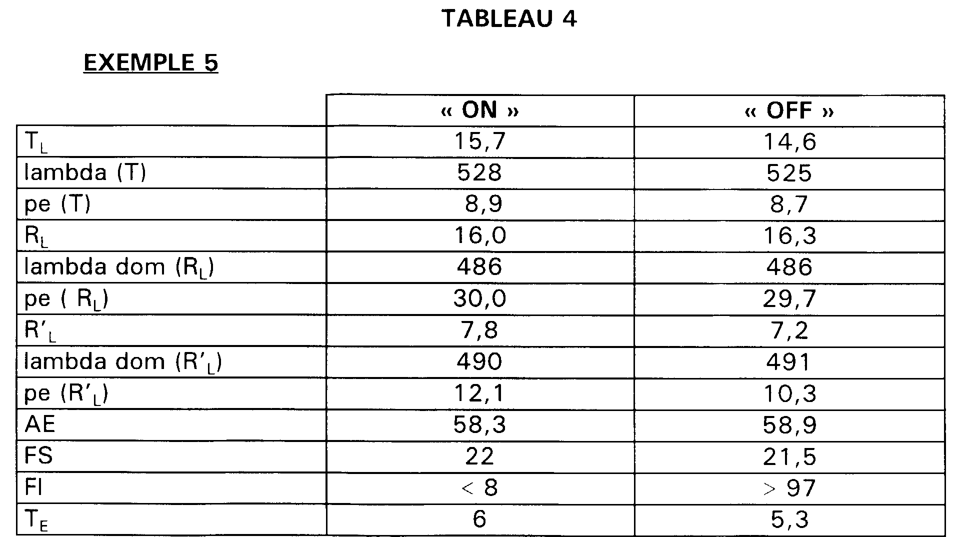

De ces données peuvent être tirées les conclusions suivantes : on peut « régler » le niveau de T_{L} et de T_{E} notamment par le choix des substrats, verriers, clairs ou teintés. Le revêtement réfléchissant 17 fait écran thermique, si nécessaire, vis-à-vis du système à cristaux liquides. Il permet surtout, ici, d'obtenir les aspects en réflexion coté extérieur (verre 11) et intérieur (verre 10) qui soient différents, avec par exemple presque 10 % d'écart entre les valeurs de R_{L} et R'_{L}, et une pureté de coloration en réflexion extérieure plus de deux fois plus élevée qu'en réflexion intérieure : on a un effet réfléchissant net, avec une couleur soutenue dans les bleus ou bleu-vert quand on regarde le vitrage de l'extérieur, effet qui est beaucoup moins notable quand on regarde le vitrage de l'intérieur. On a pu vérifier que, en l'absence de revêtement réfléchissant, le vitrage présente des aspects en réflexion intérieure et extérieure absolument identiques, l'aspect du vitrage à l'état « ON » étant blanc et laiteux de chaque côté.

Enfin, du tableau 4, on voit que l'utilisation du verre teinté permet de diminuer la valeur de réflexion intérieure R'_{L}.

On peut donc avec ce type de vitrage moduler sa diffusion lumineuse, de manière à ce qu'un local ou un habitacle se trouve à l'abri des regards extérieurs. Mais en plus, l'observateur extérieur verra le vitrage réfléchissant dans une teinte agréable, qu'il soit à l'état diffusant ou non, aspect extérieur esthétique tout à fait recherché actuellement.

L'invention permet ainsi d'ajuster colorimétriquement l'aspect en réflexion extérieur d'un vitrage à cristaux liquides, avec un intérêt tout particulier lorsque ce type de vitrage équipe des véhicules : on peut alors ajuster l'aspect du vitrage vu de l'extérieur en fonction de la couleur de la carrosserie par exemple.

### EXEMPLE 6

Cet exemple correspond à la figure 5, qui représente un vitrage à cristaux liquides du type de celui de la figure 4, cette fois monté en double vitrage : on retrouve la structure feuilletée verre 10 / PVB 12 / PET 14 /système à cristaux liquides 16 / PET 15 / PVB 13 / verre 11, structure qui est feuilletée à un troisième verre clair 18 par l'intermédiaire d'une lame d'argon 19 et porteur, du côté de sa face tournée vers la lame d'argon, du revêtement réfléchissant 17. C'est le verre 18 qui est destiné à être le verre tourné vers l'extérieur une fois le vitrage monté.

Par ailleurs, les vitrages décrits dans tous ces exemples peuvent être fonctionnalisés, par exemple en présentant en face(s) extérieure(s), un revêtement anti-salissures, par exemple en TiO₂ cristallisé au moins partiellement, comme évoqué plus haut, ou un revêtement hydrophobe anti-pluie à base de polymère silane fluoré.

## Revendications

1. Vitrage comportant au moins un système actif (4; 16) à propriétés optiques et/ou énergétiques variables, notamment électrocommandable du type système à transmission/absorption lumineuse variable (4) ou du type système à diffusion lumineuse variable ou du type système photochrome (16), ***caractérisé en ce qu'***il comporte également au moins un moyen de protection thermique vis-à-vis du système actif et/ou d'ajustement de l'aspect optique conféré par ledit système audit vitrage, moyen sous la forme d'au moins un revêtement (6 ; 17) à propriétés de réflexion dans l'infrarouge et/ou dans le domaine visible et/ou dans l'ultra-violet.

2. Vitrage selon la revendication 1, ***caractérisé en ce que*** le revêtement (6 ; 17) comprend au moins une couche réfléchissante associée à au moins une couche de matériau diélectrique, et notamment disposée entre deux couches de matériau diélectrique.

3. Vitrage selon la revendication 1 ou la revendication 2, ***caractérisé en ce que*** le revêtement (6 ; 17) comprend au moins une couche réfléchissante à base d'au moins un des métaux du groupe Ag, Au, Cu, Al, Cr, Ni, Fe, Ta, Zn, Zr, Sn, In, Rh, Cd ou à base d'au moins un nitrure métallique tel que TiN, ZrN, HfN.

4. Vitrage selon la revendication 1, ***caractérisé en ce que*** le revêtement (6 ; 17) comprend au moins une couche réfléchissante à base d'oxyde(s) métallique(s) éventuellement dopé(s), notamment à base d'oxyde de titane ou d'oxyde d'étain dopé.

5. Vitrage selon l'une des revendications précédentes, ***caractérisé en ce que*** le système électrocommandable est à transmission/absorption lumineuse variable (4) sous forme d'un système à matériau(x) d'insertion réversible tel qu'un système électrochrome comportant un empilement de couches fonctionnelles comprenant une couche électroconductrice, une couche électrochrome dite cathodique susceptible d'insérer réversiblement des cations tels que H⁺, Li⁺, Na⁺, Ag⁺, une couche d'électrolyte, éventuellement une seconde couche électrochrome dite anodique susceptible d'insérer également réversiblement des cations et une seconde couche électroconductrice.

6. Vitrage selon la revendication 5, ***caractérisé en ce que*** le système électrochrome (4) comprend un empilement de couches fonctionnelles dont un matériau électrolyte sous la forme d'un liquide aqueux ou anhydre ou sous la forme de polymère(s) ou de gel(s).

7. Vitrage selon la revendication 5, ***caractérisé en ce que*** le système électrochrome (4) comprend un empilement de couches fonctionnelles dont une couche d'électrolyte sous la forme d'un matériau solide, notamment à base d'oxyde métallique, le système électrochrome ne contenant de préférence que des couches en matériau solide.

8. Vitrage selon l'une des revendications précédentes, ***caractérisé en ce que*** le système électrocommandable est un système électrochrome (4) comprenant un empilement de couches fonctionnelles disposé entre deux substrats (2, 3) rigides porteurs transparents.

9. Vitrage selon l'une des revendications 1 à 7, ***caractérisé en ce que*** le système électrocommandable est un système électrochrome comprenant un empilement de couches fonctionnelles disposé sur un seul substrat rigide porteur transparent.

10. Vitrage selon la revendication 8 ou la revendication 9, ***caractérisé en ce qu'***au moins un des substrats (2, 3) porteurs du système électrochrome (4) est feuilleté à un autre substrat rigide (1) par l'intermédiaire d'une feuille (5) de polymère d'assemblage du type PVB, EVA, PU.

11. Vitrage selon l'une des revendications 8 à 10, ***caractérisé en ce qu'***au moins un des substrats (2, 3) porteurs du système électrochrome (4) est associé à au moins un autre substrat rigide (7) par l'intermédiaire d'une lame de gaz intercalaire (8) pour former un vitrage multiple.

12. Vitrage selon l'une des revendications 8 à 11, ***caractérisé en ce que*** le revêtement réfléchissant (6 ; 17) est disposé sur la face d'un des substrats porteurs opposée à celle tournée du côté du système électrochrome ou sur l'une des faces de l'un des autres substrats constitutifs dudit vitrage, notamment en présentant la séquence verre (1)/ revêtement réfléchissant (5)/ feuille de polymère d'assemblage (5)/ verre (2)/ système électrochrome (4)/ verre (3) ou appartient à la couche électroconductrice dudit système.

13. Vitrage selon l'une des revendications 1 à 4, ***caractérisé en ce que*** le système électrocommandable est à diffusion lumineuse variable sous forme d'un système à valve optique ou à cristaux liquides (16), notamment comprenant un film composite de polymère dans lequel sont noyées des gouttelettes de cristaux liquides, avec de préférence l'indice ordinaire des cristaux liquides nₒ égal à l'indice du polymère nₚ, et disposé entre deux couches électroconductrices.

14. Vitrage selon la revendication 13, ***caractérisé en ce que*** le film de composite du type valve optique ou à cristaux liquides entre les deux couches électroconductrices (16) est muni sur au moins une de ses faces, notamment sur chacune de ses faces, d'un substrat porteur rigide ou semi-rigide transparent, du type verre, polymère acrylique, certains polycarbonates PC, ou flexible du type polyéthylène téréphtalate PET (14, 15).

15. Vitrage selon la revendication 14, ***caractérisé en ce que*** l'ensemble comportant le film de composite (16) du type valve optique ou à cristaux liquides, ses couches électroconductrices et son ou ses substrats-porteurs (14; 15) est feuilleté à au moins un substrat rigide (10, 11) transparent du type verre à l'aide d'au moins une couche de polymère organique (12, 13) d'assemblage du type polyvinylbutyral (PVB), éthylènevinylacétate EVA ou certains polyuréthanes (PU).

16. Vitrage selon l'une des revendications 13 à 15, ***caractérisé en ce que*** les goutelettes de cristaux liquides du composite (16) contiennent un colorant, notamment sous la forme de colorant(s) dichroïque(s).

17. Vitrage selon l'une des revendications 13 à 15, ***caractérisé en ce que*** le revêtement réfléchissant (17) est disposé sur l'une ou l'autre des faces d'un des substrats porteurs (11), sur l'une des faces de l'un des autres substrats constitutifs du vitrage, notamment en présentant la séquence : verre (10)/ revêtement réfléchissant (17)/ feuille de polymère d'assemblage (12)/ feuille flexible (14)/ composite (16)/ feuille flexible (15)/ feuille de polymère d'assemblage (13)/ verre (10).

18. Vitrage selon l'une des revendications 13 à 17, ***caractérisé en ce que*** au moins un des substrats porteurs (10, 11) du système à cristaux liquides (16) est associé à au moins un autre substrat rigide (18) par l'intermédiaire d'une lame de gaz (19) pour former un vitrage multiple.

19. Vitrage selon l'une des revendications précédentes, ***caractérisé en ce qu'***au moins un des substrats constitutifs dudit vitrage est un substrat absorbant, notamment un substrat verrier teinté dans la masse, de préférence le substrat (10) qui se trouve séparé du substrat (11) en contact avec le revêtement réfléchissant (17) par au moins le système actif (4; 16).

20. Utilisation du vitrage selon l'une des revendications 1 à 19 en tant que vitrage bâtiment, notamment en tant que vitrage extérieur, vitrage de cloison intérieure ou porte vitrée.

21. Utilisation du vitrage selon l'une des revendications 1 à 19 en tant que vitrage de moyens de transport, notamment vitrage pour l'automobile tel qu'un toit auto, vitrage ferroviaire, vitrage avion.

22. Utilisation du vitrage selon l'une des revendications 1 à 18 en tant que miroir, notamment en tant que miroir sans tain du type « miroir-espion ».
